# EUROPÄISCHE PATENTSCHRIFT

(11) **EP 0 770 870 B1**
(45) Veröffentlichungstag und Bekanntmachung des Hinweises auf die Patenterteilung: **01.08.2001**
(21) Anmeldenummer: 96117153.5
(22) Anmeldetag: 25.10.1996
(51) Int. Cl.: G01N 30/20, G01N 30/72

(54) **Ventil und dessen Verwendung**
Valve and its use
Vanne et son utilisation

(30) Priorität: 25.10.1995 DE 19539589
(43) Veröffentlichungstag der Anmeldung: 02.05.1997
(73) Patentinhaber: GSF-Forschungszentrum für Umwelt und Gesundheit GmbH, 85758 Oberschleissheim (DE)
(72) Erfinder: Boesl, Ulrich, Dr., 84036 Landshut (DE); Zimmerman, Ralf, Dipl.Chem., 80339 München (DE); Kettrup, Antonius, Prof.Dr., 59821 Arnsberg (DE)

(56) Entgegenhaltungen:
- US-A- 5 178 767
- US-A- 5 224 510
- WANG A P L ET AL: "PULSED SAMPLE INTRODUCTION INTERFACE FOR COMBINING FLOW INJECTION ANALYSIS WITH MULTIPHOTON IONIZATION TIME-OF-FLIGHT MASS SPECTROMETRY" ANALYTICAL CHEMISTRY, Bd. 64, Nr. 7, 1.April 1992, Seiten 769-775, XP000277710
- WANG A P L ET AL: "LIQUID CHROMATOGRAPHY/TIME-OF-FLIGHT MASS SPECTROMETRY WITH A PULSED SAMPLE INTRODUCTION INTERFACE" ANALYTICAL CHEMISTRY, Bd. 66, Nr. 21, 1.November 1994, Seiten 3664-3675, XP000483804

## Beschreibung

Die Erfindung betrifft ein Ventil nach dem Oberbegriff des Patentanspruches 1, wie es aus US-A-5224510 bekannt ist und dessen Verwendung.

Gaschromatographie-Massenspektrometrie (GC-MS) hat sich zu einer ausgereiften, hochkomplexen Methode der Spurenanalytik entwickelt. In jedem Analyselabor, das zum Beispiel Nachweis chlorierter Aromaten oder Dioxine durchführt, wird GC-MS eingesetzt. Allerdings stößt die konventionelle GC-MS nun an die Grenzen ihrer Entwicklungsmöglichkeiten; diese betreffen vor allem Schnelligkeit und chemische Probenpräparation. Für eine hochempfindliche, hochselektive Kapillar-GC-MS-Analyse, z.B. von Chlordioxin-Isomeren, kann die chemische Probenaufbereitung (clean-up) bis zu mehreren Tagen dauern. Neben dem Personalaufwand bedeutet dies vor allem einen großen Zeitaufwand, der in vielen Fällen nicht akzeptabel ist (Katastrophenfall, Online-Überwachung von Großverbrennungsanlagen, produktionsintegrierter Umweltschutz laut BMFT-Aktion 1994). Aber selbst der GC-MS-Lauf in der Ultraspurenanalytik kann eine Stunde und länger dauern und selbst dann können Interferenzen (z.B. von Pentachlor-Biphenylen und Tetrachlor-Dioxinen) im GC-MS-Spektrum auftreten. Aufwendiges "Clean-up" und schwere, aber doch hoch präzis justierte Magneten machen zudem konventionelle Kapillar-GC-MS für eine mobile Analytik unbrauchbar. In den letzten 15 Jahren wurden daher neue Wege beschritten, wobei entweder die Massenspektrometrie durch andere selektive Nachweismethoden, vornehmlich durch UV-Spektroskopie ersetzt wurde, neue Methoden der Massenspektrometrie eingeführt wurden oder dreidimensionale Methoden durch Kombination von GC, UV-Spektroskopie und Massenspektrometrie entstanden. In den meisten Fällen war Erhöhung der Schnelligkeit und/oder Vermeidung oder Verringerung des Aufwandes für das "Clean-up" das Ziel.

### Stand der Technik:

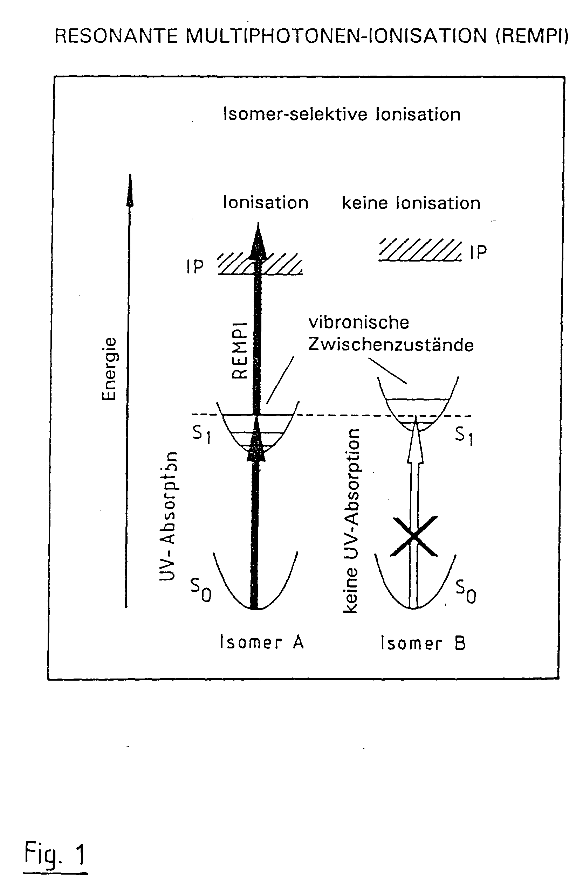

Effusiver Gaseinlaß: In frühen Versuchen wurde das Ende der GC-Kapillare als kontinuierlicher effusiver Gaseinlaß in ein Vakuum verwendet, oder auch in eine Gaszelle, wie zum Beispiel eine Art Proportionalzählrohr /1/. Die Ionen werden hierbei durch Resonanz-verstärkte Multiphotonen-Ionisation (REMPI)/2/ erzeugt (siehe Figur1). Da das erste Photon aufgrund seiner Wellenlänge molekülspezifisch absorbiert wird, ist diese Ionisationsmethode sehr selektiv (Figur1). Es wird sozusagen die UV-Spektroskopie in den Ionisationsprozess mit einbezogen. Eine andere Arbeitsgruppe /3/ ließ die GC-Kapillare direkt in der Ionenquelle eines Flugzeitmassenspektrometers enden, wobei sie einen in der Wellenlänge nicht abstimmbaren Excimerlaser für die Ionisation verwendeten. Im Prinzip eignet sich diese Anordnung - effusiver Einlaß in Ionenquellen von Flugzeitmassenanalysatoren - auch für REMPI /4,5,6/.

Nachteil eines effusiven Gaseinlasses ist die reduzierte Selektivität der UV-Spektroskopie, da selbst bei Zimmertemperatur durch thermische Anregung von Schwingungen und Rotationen die Spektren größerer Moleküle (z.B.PAH's) von starker Bandenüberlagerung bis hin zur Strukturlosigkeit geprägt sind.

Kontinuierlicher Überschallstrahl: Schon früh stellte man fest, daß sich in einem Überschallstrahl eines Trägergases (z.B.Edelgas) mit wenigen Prozent Anteil eines Moleküls, dieses sich auf sehr niedrige Temperaturen kühlen läßt, ohne daß es auskondensieren kann /6/. Für die UV-Spektroskopie größerer Moleküle lieferte dies entscheidende neue Impulse. Aber auch die Vorteile dieser neuen Spektroskopie für die Analytik wurden bald erkannt /7/. So wurde das Gas einer GC-Kapillare an dessen Ende durch eine 150 µm weite Düse ins Vakuum entspannt, mit einem wellenlängen-abstimmbaren Laser angeregt und die induzierte Fluoreszenz registriert. Auf Grund der Molekülkühlung war diese Anregungsspektroskopie nun besonders selektiv /8/. In einer speziellen "sheath-flow"-Anordnung, in der der eigentliche Überschallstrahl durch eine Art Mantelgas refokussiert wird, konnte die Empfindlichkeit noch erheblich gesteigert werden (200-20ng) /9/. In einer weiteren Anordnung mit anderer Zielsetzung wurde der kontinuierliche Überschallstrahl aus einer GC-Kapillare zur Trennung von Trägergas und den zu spezifizierenden Molekülen verwendet (verschiedenes räumliches Verhalten) um dann mit nichtselektiven Ionisationsmethoden und Quadrupolmassenspektrometer nachzuweisen /10/. Nachteile kontinuierlicher Überschallstrahlen sind entweder hoher Gasanfall und damit hohe Anforderungen an das Vakuumsystem oder Rückstau in die Kapillare mit Reduzierung der GC-Auflösung. Vor allem aber führt ein kontinuierlicher Gaseinlaß kombiniert mit einer gepulsten Ionisationsmethode - wie REMPI - zu einem ungünstigen Verhältnis von Probengas-Pulslänge zu Ionisations-Pulslänge, und damit zu Einbuß in der Empfindlichkeit.

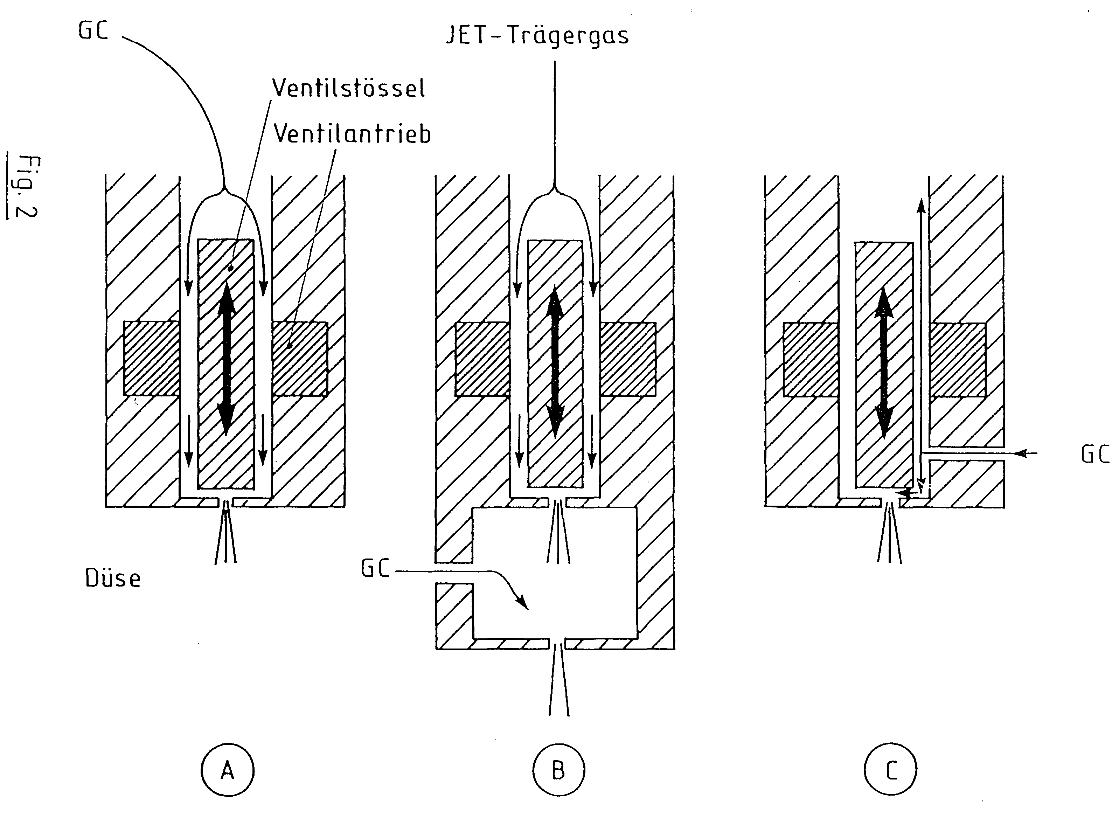

Gepulste Überschallstrahlen: Schließlich wurden gepulste Ventile zur Erzeugung von Überschallstrahlen eingesetzt, um die GC-Kopplung an gepulste Ionenquellen, z.B. Ionisation mit gepulsten Lasern, und an gepulste ICR-Beladung /11/, an mit gepulsten Lasern induzierten Fluoreszenznachweis /12/ oder an ein Flugzeitmassenspektrometer /13,14/ anzupassen. Dabei stellt speziell die Heizbarkeit der Ventile und damit die Anpassung an die Temperatur der GC-Säule oft ein Problem dar. Drei verschiedene Arten der Kopplung der GC-Kapillare an das gepulste Ventil haben sich bisher herauskristallisiert.
(A) Einkopplung in die übliche Trägergaszuleitung des gepulsten Überschallstrahl-Ventils /13/ (siehe Figur2A). Hier muß das Gas über schmale lange Zwischenräume zwischen beweglichem Ventilstößel und seiner Führung entlangstreifen, bis es zur periodisch geöffneten Düse gelangt. Dabei ist die Verschleifung des GC-Pulses extrem groß (schlechte GC-Auflösung), die Kühlung der Moleküle jedoch recht gut, die Empfindlichkeit reduziert (3µg, proklamiert 100 ng). Die ins Vakuum entlassenen Gaspulse waren mit 1,3 ms /13/ relativ lang (reduzierte Empfindlichkeit).
(B) Das GC-Gas wird kontinuierlich in eine sehr kleine Vorkammer eingelassen, die periodisch durch ein gepulstes Ventil mit Edelgas geflutet wird. Durch Ausströmen über ein Düsenloch der Vorkammer entsteht ein Überscahllstrahl /12/ (siehe Figur2B). Die Verschleifung der GC-Pulse ist zwar reduziert, die ins Vakuum entlassenen Gaspulse haben aber eine Länge von 50 ms, was bei einem Betrieb mit 20 Hz fast einem kontinuierlichen Gaseinlaß gleichkommt. Außderdem ist die Kühlung deutlich reduziert. Empfindlichkeiten von 6-2ng werden angegeben.
(C) Das GC-Gas wird auf halber Höhe des beweglichen Ventilstößels eingelassen /14/(siehe Figur2C). Der größte Teil wird über die übliche Edelgaszufuhr nach hinten, ein kleiner Teil wird zur periodisch geöffneten Düse nach vorne geführt. Diese Anordnung wurde gewählt, um auch mit Flüssigkeiten und Superkritischen Gasen (LC, HPLC) arbeiten zu können. Die gleichen Probleme wie bei Anordnung (A) ergeben sich auch hier. Außderdem wurde eine schlechte Kühlung beobachtet. Anordnung (A) und (C) führen auch zu Problemen der Beheizung, da das gesamte Ventil (z.B. auch Solenoid) auf hohen Temperaturen gehalten werden muß, aber wegen verwinkelter Gaswege trotzdem Kaltstellen und damit Kondensation der Meßsubstanzen nicht völlig vermieden werden können. Außerdem kann durch hohe Temperaturen die Funktionstüchtigkeit des Ventilantriebes (z.B. eines Solenoids) reduziert oder gefährdet sein. Des weiteren ist aus US-A-5178767 ein Ventil bekannt, bei dem der Ventilstößel durch eine scheibenförmige Einlage geführt wird.

### Ziele der vorliegenden Erfindung:

Aus diesen Gründen wurde ein neues gepulstes Ventil für die Kopplung von gaschromatographischen Eluenten oder kontinuierlichen Gasströmen mit einem Überschallstrahl entwickelt. Folgende Ziele, die bisher für gepulste Ventile mit GC-Kopplung gar nicht oder nicht gemeinsam erreicht werden konnten, waren für diese Entwicklung maßgebend:
- möglichst geringe zeitliche Verschleifung der GC-Peaks für hohe GC-Selektivität oder der zeitlichen Konzentrationsänderungen der Analyte in kontinuierlichen Gasströmen.
   Dies wird erreicht durch minimierte Totvolumina und Vermeidung von Gaswegen durch enge und lange Spalten. Dazu dienen vor allem die Merkmale von Anspruch 1,2 und 4. Außerdem sollen die Merkmale der Ansprüche 3,4 und 6 eine optimale Anpassung an weitere GC-Parameter gewährleisten.
- möglichst kurze Überschallstrahl-Gaspulse für hohe Empfindlichkeit.
   Kurze Gaspulse erlauben ein günstiges Verhältnis von Gaspulsdauer und Ionisationspulsdauer; dies ist besonders wichtig für Ionisation mit kurzen Laserpulsen. Kurze Probengaspulse werden durch die knappe Bauweise nach Anspruch 1 und 2 erreicht.
- Vermeidung von Verdünnungseffekten durch Zusatzgase für hohe Empfindlichkeit.
- möglichst gute Kühlung der Moleküle im Überschallstrahl
   für hohe Selektivität von Spektroskopie oder REMPI.
   Kurze Gaspulse und hohes Druckgefälle ermöglichen eine optimale Kühlung. Auch Neben der knappen Bauweise wird dies durch Optimierung der Ventilöffnungszeit (Anspruch 7) unter Berücksichtigung der GC-Bedingungen (Anspruch 6) erreicht.
- möglichst gute thermische Entkopplung des Ventilantriebs von Düsenloch und GC-Einlaß für Vermeidung von Kaltstellen (Memoryeffekte!) oder Störung des Ventilantriebs.
- Multikomponentenfähigkeit während eines Gaschromatogramms für schnelles Screening - Überprüfen ausgesuchter Sätze von Spurensubstanzen oder typischen Vertretern von Substanzgruppen. Dies soll durch die Merkmale des Nebenanspruchs erreicht werden.

Gelöst wird diese Aufgabe durch die Merkmale der Patentansprüche 1 und 8. Die abhängigen Ansprüche beschreiben vorteilhafte Ausgestaltungen der Erfindung.

Es handelt sich um ein Ventil, in das eine Gaschromatographie(GC)-Kapillare mündet, das der Erzeugung eines molekularen Überschallstrahles in ein Vakuumgefäß dient, wodurch eine Kopplung des GC an sekundäre Spurenanalysegeräte, insbesondere Massenspektrometer, Fluoreszenzzellen und Ionisationsmeßzellen, realisiert wird, das einen Ventilkopf mit dem Ende eines beweglichen Ventilstößels und einer Kappe mit Düsenloch beinhaltet. Die Spitze des Ventilstößels **1** ist so geformt, daß sie das Düsenloch periodisch öffnen und schließen kann, daß sie gleichzeitig den Weg zwischen Düsenloch und Spitze der GC-KapillarSäule **6** während der Öffnungsphase freigibt, und daß sie gegen den Rest des Ventilstößels und des Ventilinnenraumes abgedichtet ist. Das Ende der GC-Kapillare ist so geführt, daß es unmittelbar an die Ventilstößelspitze heranreicht und daß es gegen den Innenraum zwischen Ventilstößelführung **2** und Kappe **3,** sowie zwischen Ventilstößelführung **2** und Ventilstößel **1** abgedichtet ist, dergestalt, daß das Totvolumen zwischen und um GC-Kapillarsäulenende, Ventilstößelspitze und Düsenloch so klein wie möglich ist. Der Ventilkopf, bestehend aus Kapillarsäulenende **6,** Ventilstößelende **1**, Düsenloch **7** und umgebende Dichtungen **4,5,8,** Führungen und Halterungen ist auf für den GC-Betrieb geeignete Temperaturen heizbar. Für die Ausbildung eines gepulsten Überschallstrahls wird nur das Trägergas aus der GC-Kapillarsäule und kein zusätzliches Trägergas verwendet. Die thermische Entkopplung von Ventilkopf und Ventilantrieb, wichtig für einen störungsfreien Betrieb des Solenoid- oder Piezoantrieb, wird durch räumliche Trennung und selektive Heizung des Ventilkopfes und Kühlung des Ventilantriebs erreicht. Die mittlere Öffnungszeit - Pulslänge x Öfffnungsfrequenz - des Ventils ist auf den Gasfluß des GC abgestimmt. Öffnungszeit und Druckgefälle zwischen Ventilinnenseite und Vakuumgefäß sind so optimiert, daß eine effektive molekulare Kühlung im Überschallstrahl erreicht wird und so hochaulösende UV-Spektroskopie und damit auch hochauflösende resonante Multiphotonen-Ionisation (REMPI) möglich ist. Die geometrischen Ausmaße, insbesondere der Durchmesser des Ventilkopfes, sind klein genug um es in die Ionenoptik eines Flugzeitmassenspektrometers zu integrieren. Ein Ventil, kombiniert mit resonanter Multiphotonenionisation kann so betrieben werden daß, von gepulsten Anregungslichtquellen, insbesondere Lasern, mit mehreren sehr schnell umschaltbaren Wellenlängen und hoher Pulswiederholrate Licht in den GC-Überschallstrahl eingekoppelt wird dergestalt, daß mit einzelnen, ausgesuchten Wellenlängen selektiv eine Substanz oder eine Substanzklasse angeregt wird, daß für jede dieser Wellenlängen ein eigenes, zeitverschobenes Flugzeitmassenspektrum aufgenommen wird, und daß innerhalb eines GC-Spektrums oder sogar eines einzelnen GC-Peaks zwischen diesen Wellenlängen umgeschaltet wird.

### Beschreibung eines Ausführungsbeispiels:

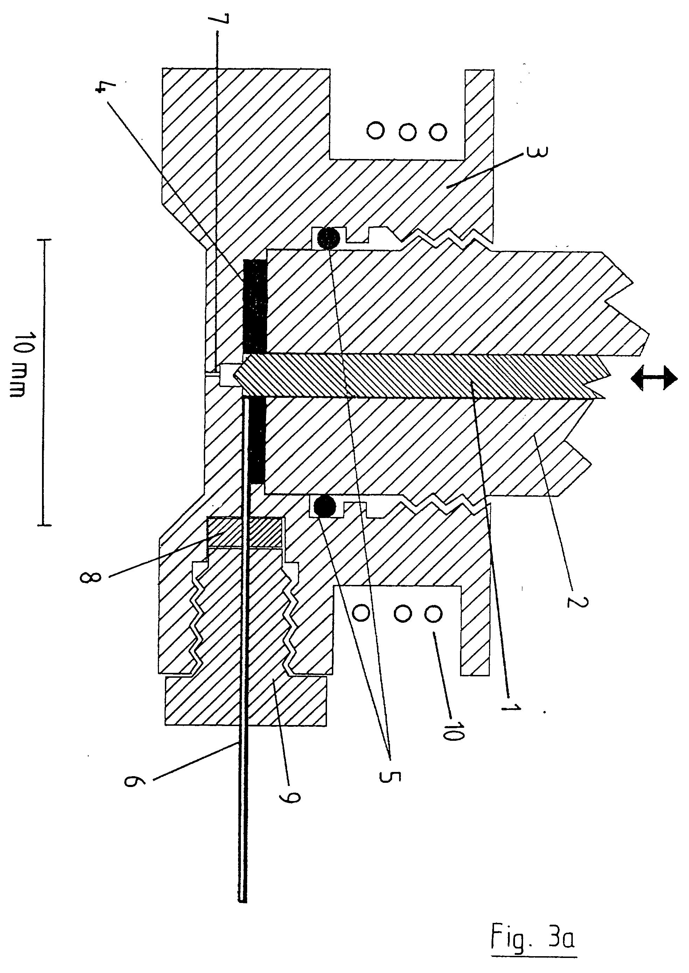

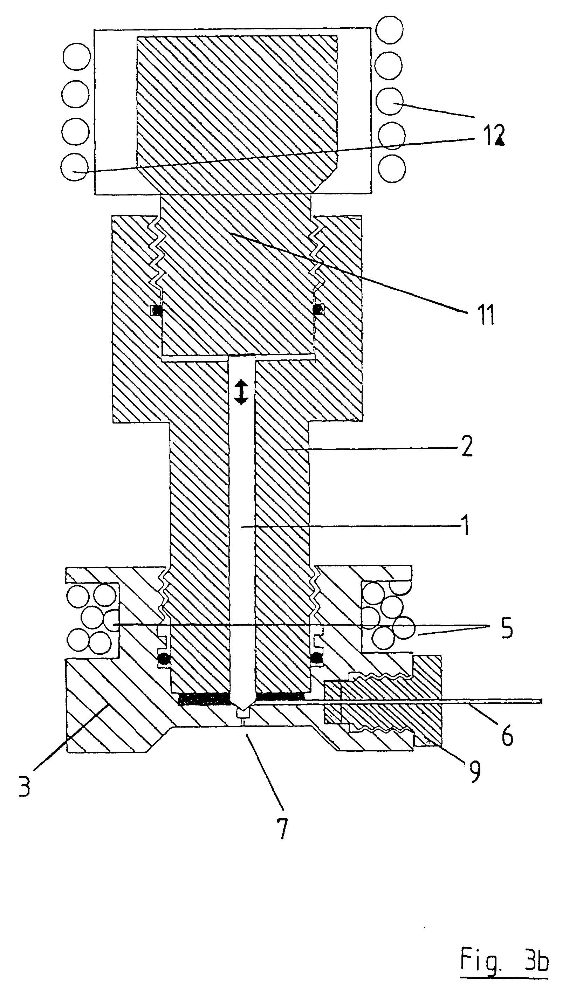

In Figur 3a ist eine Ausführungsform des Ventilkopfes nach obigen Patentansprüchen dargestellt. Das gesamte Ventil einschließlich Ventilantrieb wird in Figur 3b gezeigt. Der Ventilkopf besteht aus einer Kappe **3,** dem Führungsteil **2** für den beweglichen Stößel **1,** der Einkopplung (Dichtung) **9** für die GC-Säule **6.** Kappe **3** und Führungsteil **2** sind miteinander verschraubt. Die Bohrung im Führungsteil **2** in der der Stössel **1** geführt ist, ist auf Passung zum Stössel **1** gefertigt um eine Flächendichtung des Ventilkopfraums gegen den Ventiltrieb **11** zu realisieren.Eine weitere Dichtwirkung wird durch die Einlage **4** erreicht. Mittig im Boden der Kappe **3** befindet sich auf der Hochdruckseite eine becherförmige Senkung mit einem Durchmesser von 0,3-1,2 mm und einer Tiefe von ca. 1 mm. Die konische Spitze des Stössels **1**, die aus verschiedenen Materialien gefertigt sein kann (z.B. Vespel, Aluminum, Messing, Teflon) dichtet gegen die obere Kante der becherförmigen Senkung (Kantendichtung). Alternativ kann der Rand der becherförmigen Senkung konisch abgesenkt sein, um eine Flächendichtung mit den Stössel zu ermöglichen. Im Boden der becherförmigen Senkung befindet sich das Düsenloch **7** mit z.B. 0,1 mm bis 0,8 mm Durchmesser und 0,1 bis 1 mm Länge. Das Volumen der becherförmigen Senkung ist über dieses Düsenloch **7** an die Vakuumseite angekoppelt. Bei einer Anhebung des Stössels **1** wird die becherförmige Senkung zur Hochdruckseite geoffnet. Dadurch wird ein Teil der kontinuierlich durch das Ventil fließenden Gasprobe durch das Düsenloch **7** in das Vakuum entspannt und damit ein Überschallstrahl (Jet) ausgebildet. Im Trägergas gelöste Moleküle werden in ihren Rotations- und Schwingungsbewegungen stark gekühlt. Im Betrieb des Ventils als Kopplungselement zwischen Gaschromatographie und z.B. resonanter Laserionisation im Überschallmolekularstrahl wird das Ventil periodisch mit einer möglichst hohen Widerholfrequenz von z.B. 20 Hz betrieben. Mit Solenoid-Antrieben des Ventilstößels lassen sich Öffnungszeiten zwischen 100 und 200 µs erzielen. Zwischen dem Führungsteil **2** des Ventilstößels und dem Boden der Kappe **3** befindet sich eine scheibenförmige Einlage **4** aus z.B.Vespel, Stahl, Teflon oder Glas. In ihren Boden ist radial eine Nut eingefräßt, deren Innenmaße genau den Außenmaßen der Kapillarsäule entsprechen. Diese Vespeleinlage **4** dient als Abstandshalter zwischen **2** und **3,** als Führung für das Ende der Kapillarsäule **6** und als Dichtung des Kapillarsäulenendes gegen den Spalt zwischen Stößel **1** und seiner Führung **2.** Das Ende der Kapillarsäule **6** ist außerdem durch eine Mikrodichtung aus Graphit **8** und Schraubverschluß **9** gegen das Vakuum abgedichtet. Die Anordnung von Kapillarsäulenende, Ventilstößelspitze und zentraler Öffnung in der Vespeleinlage gewährleistet ein minimales Totvolumen vor dem Kapillarenende, das sich sehr rasch über das Düsenloch entleeren kann, wenn der bewegliche Stößel das Düsenloch und den Weg zwischen Düsenloch und Kapillarende pulsartig freigibt. Das sich entspannende Gas ist dabei das GC-Trägergas, in dem die Probensubstanzen gelöst sind und gemäß ihren Retentionszeiten am Kapillarsäulenende ankommen.

In Figur 3b ist eine Ausführungsform gezeigt, in der eine räumliche Trennung von Ventilkopf und eines Solenoid-Ventilantriebs **11** durch eine Verlängerung des Ventilstößels **1** und seiner Führung **2** realisiert wurde. Der weitere Verlauf des Stössels **1** im Ventilantrieb **11** ist nicht dargestellt. Der Ventilkopf **3** kann durch die Heizung **5** geheizt werden, um das Kondensieren schwerflüchtiger Substanzen zu vermeiden. Wenn durch dieses Heizen die Temperatur des Solenoid-Ventiltriebs zu hoch wird, kann dieser durch eine Kühlung **12** gekühlt werden. Durch die Trennung von Ventilkopf **3** und Ventilantrieb **11** werden eine Überhitzung des Ventilantriebs **11** und damit verbundene Fehlfunktionen vermieden. Eine solche GC-Kopplung mit gepulstem Überschallstrahlventil hat hervorragende Eigenschaften, insbesondere für die Kombination mit resonanter Multiphotonenionisation (REMPI) und Flugzeitmassenspektrometrie. Das minimale Totvolumen und die Vermeidung von Gasdiffusion in langen, dünnen Kanälen, z.B. zwischen Ventilstößel und Ventilstößelführung, verhindern sowohl das Verschleifen der GC-Pulse wie auch Memoryeffekte. Die Einspeisung des GC-Efluents noch auf der Hochdruckseite des Ventils und die Verwendung des GC-Trägergases als Trägergas des Überscahllstrahles führt zu hervorragender Kühlung der inneren molekularen Bewegungsfreiheitsgrade. Die kurzen Gaspulse erlauben die Erfassung eines hohen GC-Gasanteils durch gepulste Ionisationsmethoden.

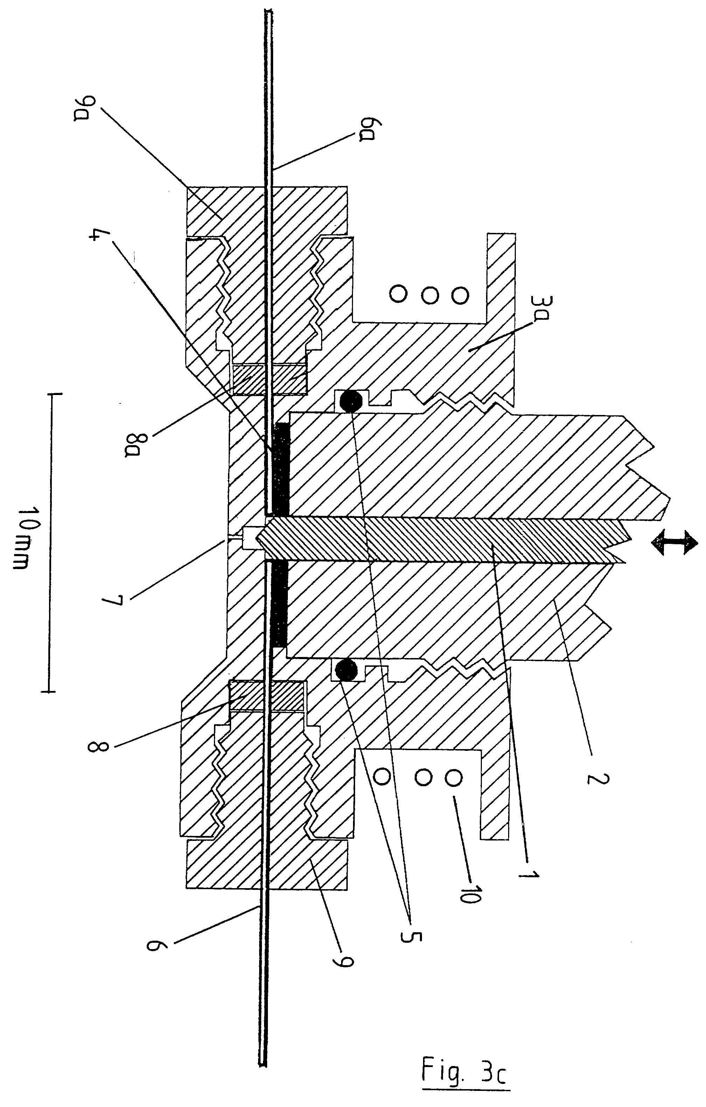

In der Figur 3c ist eine Ausführungsform des Ventilkopfes dargestellt zur Einkopplung einer kontinuierlich eingespeisten Gasprobe (z.B. für eine on-line Messung von Emissionen). Der Ventilkopf besteht aus einer Kappe **3a,** dem Führungsteil **2** für den beweglichen Stößel **1,** der Einkopplung **9** und Dichtung **8** für die GC-Säule **6** und der der Einkopplung **9a** und Dichtung **8a** für die Probenableitung **6a** (z.B. auf Basis einer GC-Säule oder einer Stahl-Kapillare). Die Bohrung im Führungsteil **2** in der der Stössel **1** geführt ist, ist auf Passung zum Stössel **1** gefertigt um eine Flächendichtung des Ventilkopfraums gegen den Ventiltrieb **11**zu realisieren.Eine weitere Dichtwirkung wird durch die Einlage **4** erreicht. An die Probenableitung **6a** kann ein externes Vakuum angelegt werden kann um das Probengas durch das Ventil zu ziehen. Kappe **3** und Führungsteil **2** sind miteinander verschraubt; mit einem Dichtring ist das Innere des Ventils gegen das Vakuum abgedichtet. Mittig im Boden der Kappe **3a** befindet sich auf der Hochdruckseite eine becherförmige Senkung mit einem Durchmesser von 0,3-1,2 mm und einer Tiefe von ca. 1 mm. Die konische Spitze des Stössels **1**, die aus verschiedenen Materialien gefertigt sein kann (z.B. Vespel, Aluminum, Messing, Teflon) dichtet gegen die obere Kante der becherförmigen Senkung (Kantendichtung). Alternativ kann der Rand der becherförmigen Senkung konisch abgesenkt sein, um eine Flächendichtung mit den Stössel zu ermöglichen. Im Boden der becherförmigen Senkung befindet sich das Düsenloch **7** mit z.B. 0,1 mm bis 0,8 mm Durchmesser und 0,1 bis 1 mm Länge. Das Volumen der becherförmigen Senkung ist über dieses Düsenloch **7** an die Vakuumseite angekoppelt. Bei einer Anhebung des Stössels **1** wird die becherförmige Senkung zur Hochdruckseite periodisch geöffnet. Dadurch wird ein Teil der kontinuierlich durch das Ventil fließenden Gasprobe durch das Düsenloch **7** in das Vakuum entspannt und damit ein Überschallstrahl (Jet) ausgebildet. Im Gas gelöste Moleküle werden in ihren Rotations- und Schwingungsbewegungen stark gekühlt. Mit Solenoid-Antrieben des Ventilstößels lassen sich Öffnungszeiten bis in den 10 µs Bereich erzielen. Zwischen dem Führungsteil **2** des Ventilstößels und dem Boden der Ventilkappe **3a** befindet sich eine scheibenförmige Einlage **4.** Diese Einlage **4** kann z.B. aus Vespel, Teflon, Edelstahl, Keramik oder Quarzglas gefertigt sein. In ihren Boden ist radial eine Nut eingefräßt, deren Innenmaße genau den Außenmaßen der Kapillarsäule entsprechen. Diese Einlage **4** dient zum Ausfüllen des Volumens zwischen Ventilkappe **3a** und dem Führungsteil **2** des Ventilstößels (zur Realisierung eines minimalen Totvolumens), als Führung für das Ende der Kapillarsäule **6** und als Dichtung des Kapillarsäulenendes gegen den Spalt zwischen Stößel **1** und seiner Führung **2.** Das Ende der Kapillarsäule **6** ist außerdem durch eine Mikrodichtung aus Graphit **8** und Schraubverschluß **9** gegen das Vakuum abgedichtet. Die geringe räumliche Distanz zwischen Kapillarsäulenende, Ventilstößelspitze und zentraler Öffnung in der Einlage **4** gewährleistet ein minimales Totvolumen von ca. 1 mm³ vor dem Kapillarenende, das sich sehr rasch über das Düsenloch entleeren kann, wenn der bewegliche Stößel das Düsenloch und den Weg zwischen Düsenloch und Kapillarende pulsartig freigibt.
Der in der Figur 3c gezeigte Ventiltyp ist besoders geeignet um eine kontinuierliche Überführung von Probengas in gepulste Überschallmolekularstahlen zu ermöglichen. Durch den Probenabzug **6a** wird eine hohe, ungestörte Strömungsgeschwindigkeit in den Kapillaren **6** und **6a** (z.B. mehere Meter pro Sekunde) und im Ventil realisiert. Dieses hat folgende Vorteiele:
1) von den Ventilöffnungszeit unbeinflußter Probennahmefluß
2) Probennahme mit hoher Zeitauflösung
3) Minimierung von chemischen Memoryeffekten
Weiterhin kann in der Figur 3c gezeigte Ventil auch zur Einkopplung des Eluenten eines Gaschromatographen verwendet werden. Das sich durch die Düse **7** entspannende Gas ist dabei das GC-Trägergas, in dem die Probensubstanzen gelöst sind und gemäß ihren Retentionszeiten am Kapillarsäulenende ankommen. Hiebei besteht nun zusätzlich zu Figur 3a und Figur 3b die Möglichkeit den über die Kapillare 6a abfließenden Eluenten mit einem sekundären spurenanalytischen Detektor (z.B. Flammenionisationsdetektor (FID) oder elctron-capture-detector (ECD)) zu analysieren.

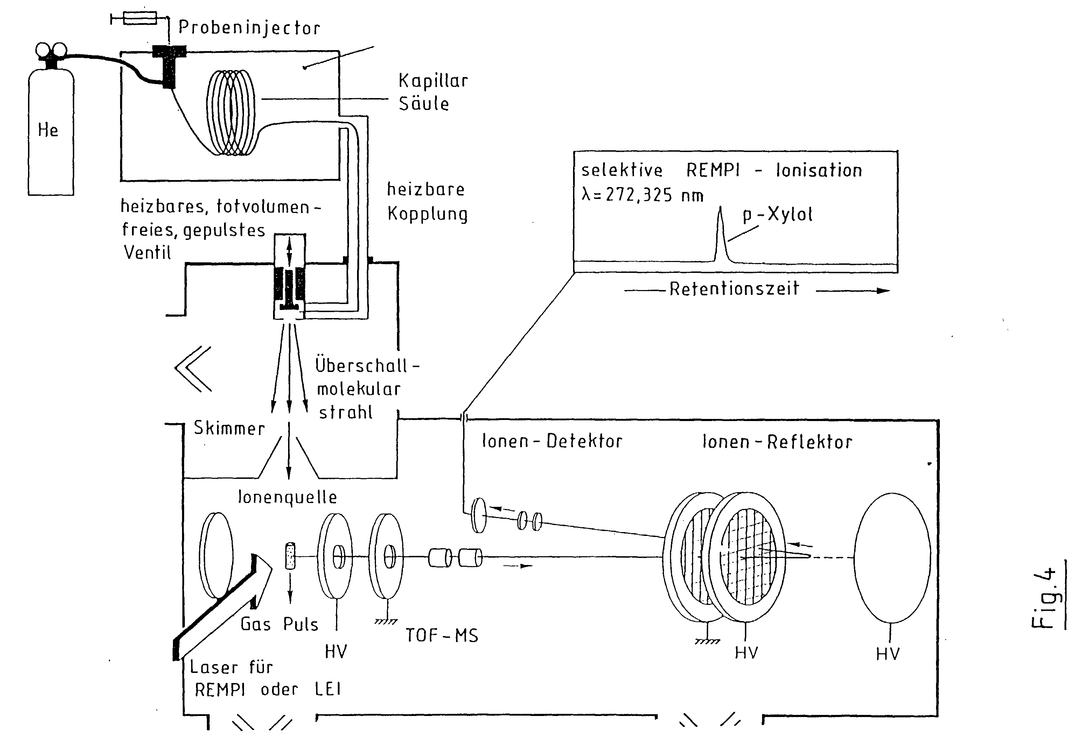

In Figur 4 ist die Ausführungsform einer Gesamtanlage abgebildet, in der das gepulste GC-Überschallstrahl-Ventil nach Figur 3 zur Kopplung von GC, REMPI und Flugzeitmassenspektrometrie eingesetzt wird. Über einen Gaschromatographen und eine heizbare Zuleitung wird das Ventil mit GC-Trägergas beschickt. Dieses entspannt sich in ein Vorvakuumsystem unter Kühlung der inneren Freiheitsgrade der in ihm gelösten Probenmoleküle. Ein Skimmer dient als Druckreduzierstufe und zur Bildung eines schmalen, gepulsten Molekularstrahles. Dieser durchquert die Ionenquelle, bestehend aus axial angebrachten Blenden mit zentralen Löchern für den Abzug von Ionen. Diese werden speziesselektiv durch resonante Multiphotonenionisation (REMPI) gebildet, quer zum Molekularstrahl mit einem statischen elektrischen Feld abgezogen und in einem Reflektron-Flugzeitmassen-Analysator nachgewiesen.

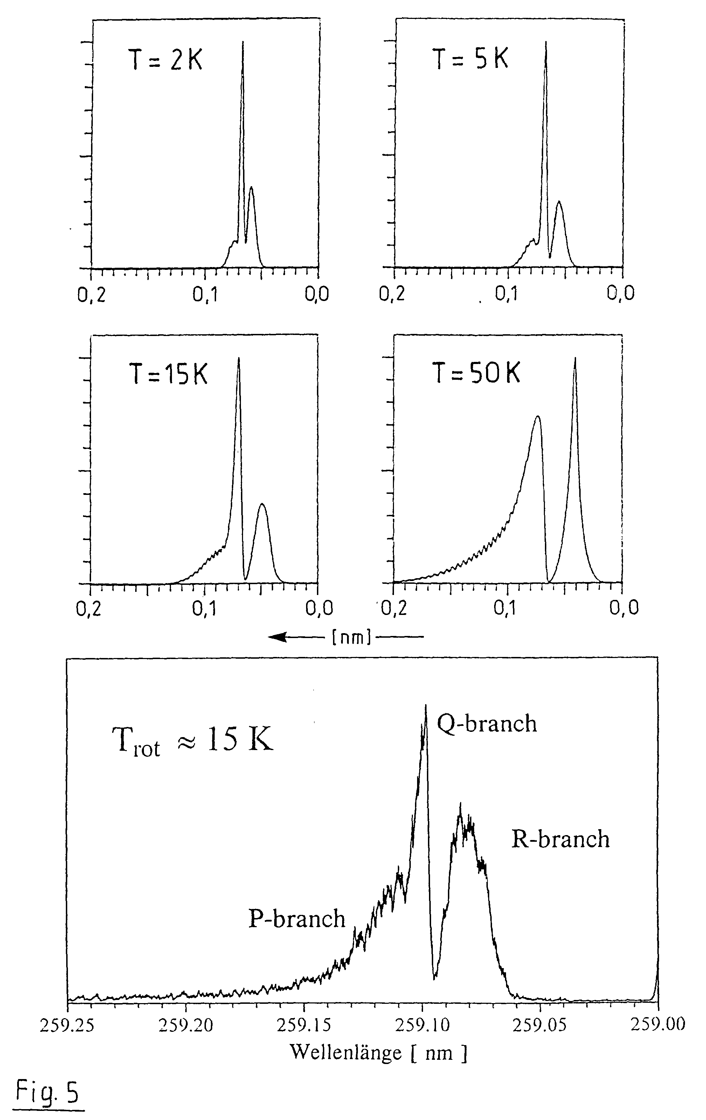

Mit dieser Apparatur wurden die folgenden Tests des GC-Überschallstrahl-Pulsventils durchgeführt: Für Wellenlängenspektren wurde ein Gas kontinuierlich eingelassen und die Signalintensität einer Masse als Funktion der Laserwellenlänge gemessen; für Flugzeitmassenspektren wurde zu einer bestimmten Retentionszeit und für einen oder gemittelt über einige wenige Laserpulse gemessen; für Gaschromatogramme wurde bei einer Masse oder einem ausgesuchten Satz von Massen und einer selektiven Wellenlänge, einer halbselektiven Wellenlänge oder unselektiver laserinduzierter Elektronenionisation gemessen. In Figur 5 ist das Wellenlängenspektrum einer vibronischen Bande von Benzol dargestellt. Aus dem Vergleich der experimentellen Form und einer theoretischen Bandenform, die für verschiedene Temperaturen simuliert werden kann, ergibt sich die sogenannte Rotationstemperatur nach der Überschallstrahlkühlung. Figur 5 zeigt die hervorragende molekulare Kühlung des Ventils. Sie ist Vorraussetzung, um die hohe Selektivität wirklich zu ereichen, die mit REMPI möglich ist.

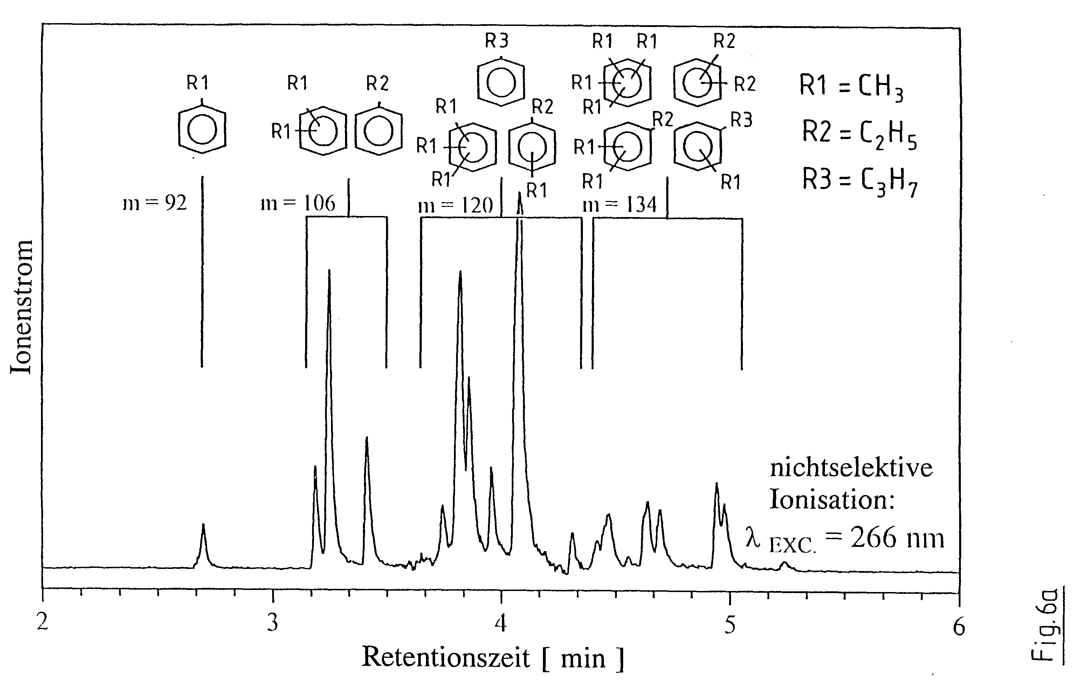

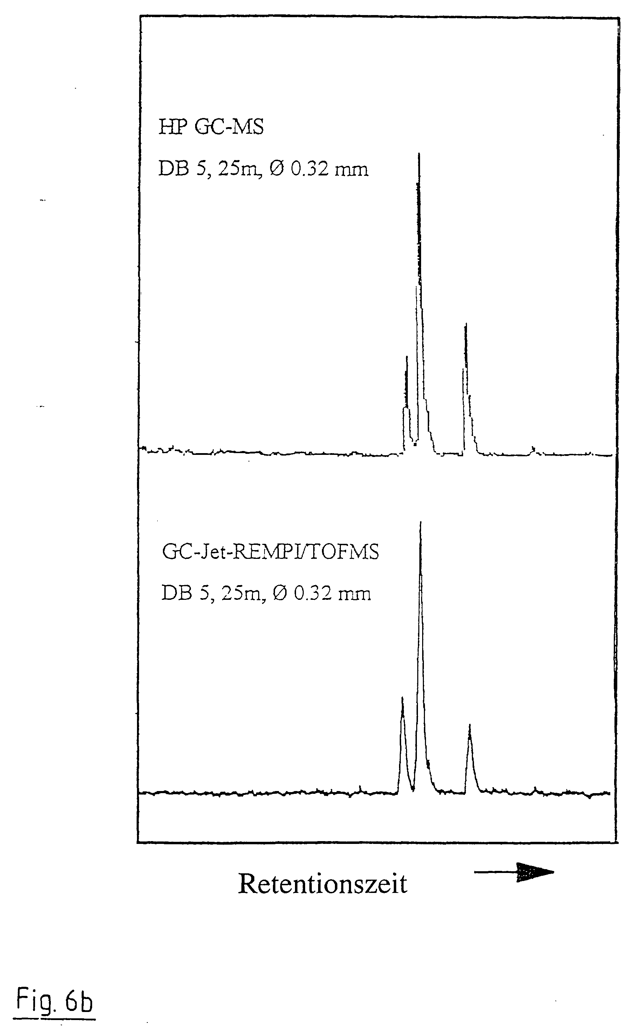

In Figur 6a ist das Gaschromatogramm eines Benzinkraftstoffes gezeigt, das mit dem GC-Überschallstrahl-Ventil, einer für Aromaten spezifischen, aber unter Aromaten unselektiven Laserwellenlänge und bei vier Massen synchron aufgenommen wurde. Bei der Masse 106 zeigen sich im Gaschromatorgramm Ethylbenzol, meta-, ortho- und para-Xylol. Dabei wurden meta- und para-Xylol von der eingesetzten Säule nicht getrennt. Eine Verschleifung der GC-Pulse ist praktisch nicht erkennbar. Dies ist aus Figur 6b ersichtlich. Hier wird die Molekülgruppe der Masse 106 einmal über konventionelle Gaschromatographie, und einmal über GC-Überschallstrahl-REMPI mit einer Laserwelllenlänge von 266 nm, wie in Figur 6a nachgewiesen. In beiden Fällen wurde eine Kapillare mit identischen Parametern verwendet.

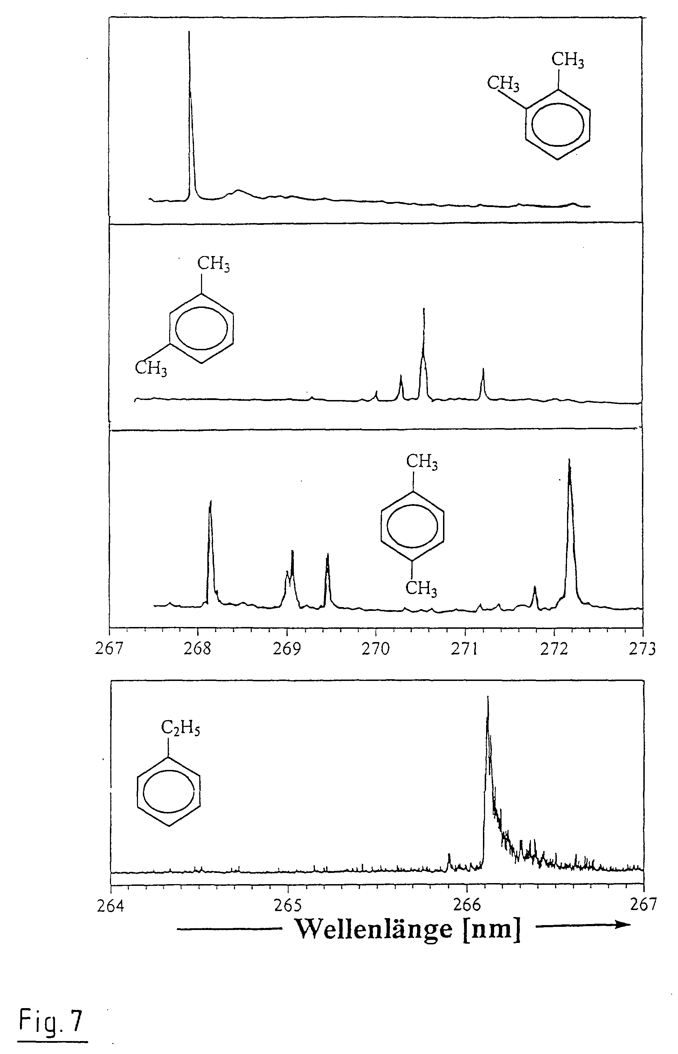

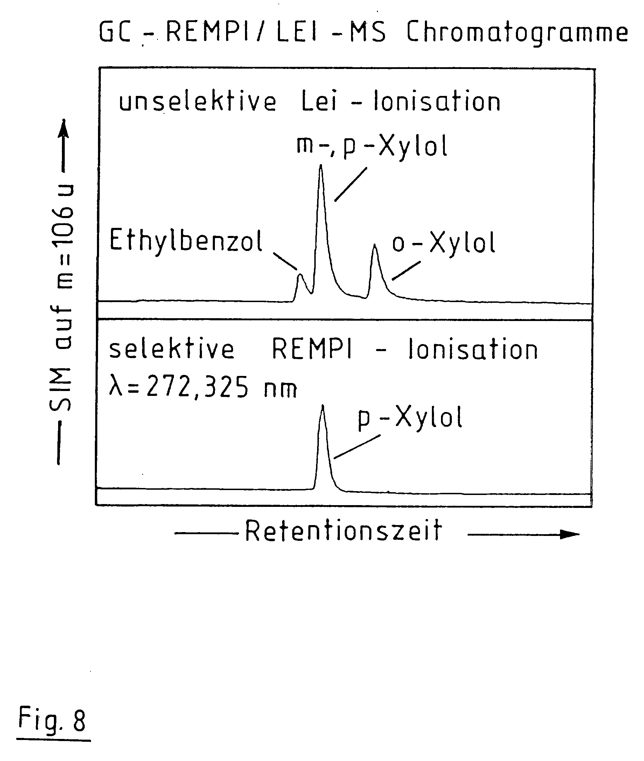

In Figur 7 und 8 soll demonstriert werden, wie mittels der Kombination des GC-Überschallstrahlventils mit REMPI das Problem fehlender Isomerenselektivität des GC - siehe Figur 6: meta- und para-Xylol - ohne chemische Vortrennung gelöst werden kann. Dazu wurde die Laserlichtquelle von 266nm (unselektiv, Figur 6a) auf 272,3 nm abgestimmt. Mit dieser Wellenlänge wird nun unter den erwähnten vier isomeren Molekülen der Masse 106 nur para-Xylol höchst selektiv angeregt. Dies belegen die REMPI-Wellenlängenspektren in Figur 7. Diese Spektren verdanken ihre spektrale Schärfe und damit Selektivität der molekularen Kühlung im Überschallstrahl. Ohne diese Kühlung wäre eine solche Isomerentrennung absolut nicht möglich. Ähnlich selektive Spektren konnten zum Beispiel für dichlorierte Dioxine und Biphenyle oder alle mehrfach chlorierten Benzole gezeigt werden /15/.

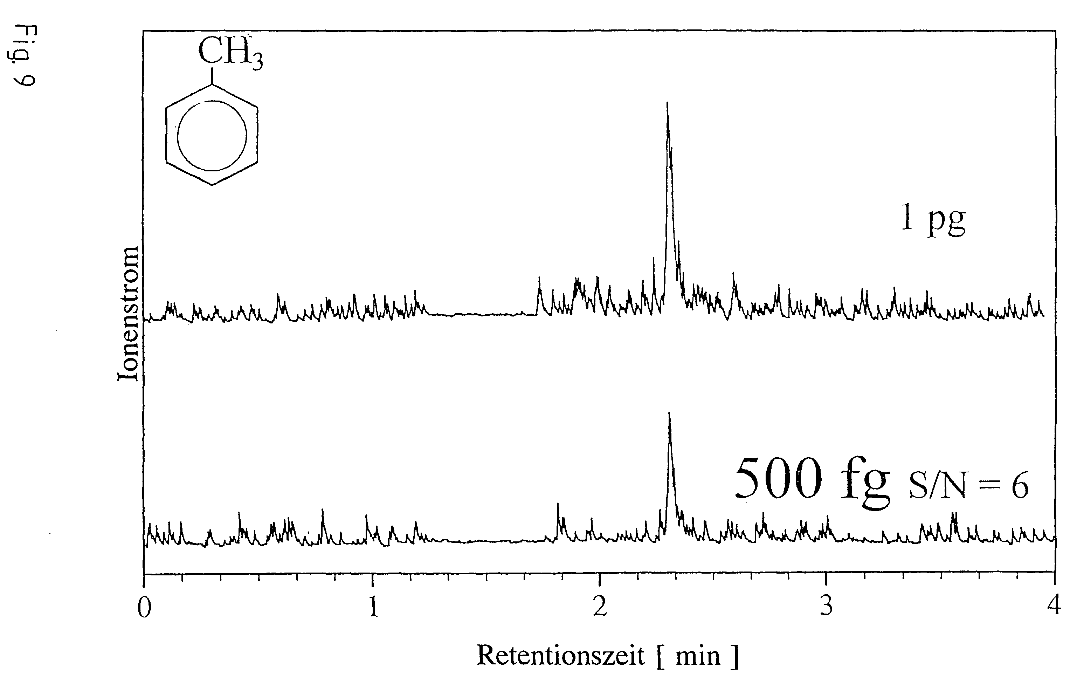

In Figur 8 oben ist zum Vergleich noch einmal ein Gaschromatogramm mit Aromaten-unselektivem REMPI-Nachweis bei einer Laserwellenlänge von 266nm gezeigt (Ausschnitt aus Figur6). In Figur 8 unten ist nun ein Gaschromatogramm der selben Probe (selber Ausschnitt der GC-Retentionszeit), aber mit para-Xylol-selektivem Nachweis bei der Laserwellenlänge von 272,3 nm. Die hohe Selektivität nur für para-Xylol ist eindeutig festzustellen. In Figur 9 wurde schließlich die Empfindlichkeit getestet. Für 500 fg Toluol betrug das Signal-zu- Rausch-Verhältnis immer noch 6. Eine Optimierung der Ionisationseffizienz, die bisher noch nicht durchgeführt wurde, kann noch zu einer Verbessserung um mindestens eine Größenordnung führen. Damit wird auch der Empfindlichkeitsbereich konventioneller hochauflösender Kapillar-GC-MS-Geräte erreicht.

Das hier vorgestellte GC-Überschall-Pulsventil eröffnet gegenüber konventioneller GC-MS die Möglichkeiten, die sich prinzipiell aus der Kombination von Gaschromatographie, hochauflösender UV-Anregung und Massenspektrometrie ergeben. Diese Möglichkeiten sind:
- eine neue hochselektive dreidimensionale Spurenanalytik: Es kommen drei Meßparameter Retentionszeit (GC), UV-Wellenlänge (REMPI) und Masse (Flugzeitmassenspektrometrie) synchron zur Wirkung.
- eine starke Reduzierung des Clean-up-Aufwandes: Man kann auf eine extrem hohe Selektivität der Gaschromatographie verzichten, da die fehlende Selektivität durch die UV-Spektroskopie wett gemacht wird.
- eine erheblich schnellere Analytik bei ähnlicher Selektivität und Empfindlichkeit wie bei konventionellen GC/MS-Gerätzen.
- ein schnelles Screening während eines einzigen GC-Laufs.
- ein mobiles und doch hochauflösendes Ultraspuren-Analysegerät.

Im Gegensatz dazu sind bisher eingesetzte Pulsventile mit Problemen wie Reduzierung der GC-Auflösung, der UV-Auflösung oder der Empfindlichkeit behaftet, was die Realisierung der Möglichkeiten bisher stark eingeschränkt oder sogar verhindert hat.

### Zitate:

/1/ Gas chromatography with detection by laser excited resonance enhanced 2-photon photoionization; C.M.Klimcak, J.E.Wessel, Anal. Chem. **52,** (1980) 1233.
/2/
   a) Multiphoton excitation and mass-selective ion detection for neutral and ion spectroscopy; U.Boesl, J. Phys. Chem. **95** (1991) 2949.
   b) Two-photon ionization of polyatomic molecules in a mass spectrometer; U.Boesl, H.J.Neusser, E.W. Schlag, Z.Naturforsch. **33A** (1978) 1546.
   c) Resonance-enhanced multi-photon ionization: a species-selective ion source for analytical time-of-flight mass spectrometry; U.Boesl, R.Zimmermann, C.Weickhardt, D.Lenoir, K.-W.Schramm, A.Kettrup, E.W.Schlag, Chemosphere **29** (1994) 1429.
/3/
   a) Ionization of alkylbenzenes studied by gas chromatography/laser ionization mass spectrometry; R.B.Opsal, J.P.Reilly, Anal. Chem. **60**, (1988) 1060;
   b) Analysis of polyaromatic hydrocarbon mixtures with laser ionization gas chromatography/mass spectroemtry;
   G.Rhodes, R.B.Opsal, J.T.Meek, J.P.Reilly, Anal. Chem. **55,** (1983) 280;
   c) Chromatographic effluent detection with laser ionization mass spectrometry R.B.Opsal, J.P.Reilly, Optics News **June** (1986) 18.
/4/ Multidimensional, laser-based instrument for the characterization of environmental samples for polycyclic aromatic compounds; R.L.M.Dobson, A.P D'Silva, S.J.Weeks, V.A.Fassel, Anal.Chem. **58,** (1986) 2129.
/5/
   a) Reflectron time-of-flight mass spectrometry and laser excitation for the analysis of neutrals, ionized molecules and secondary fragments; U.Boesl, R.Weinkauf, E.W.Schlag, Int. J. Mass spectrom. Ion Proc. **112** (1992) 121.
   b) Laser ion sources for time-of-flight mass spectrometry; U.Boesl, R.Weinkauf, C.Weickhardt, E.W.Schlag, Int. J. Mass Spectrom. Ion Proc. **131** (1994) 87.
/6/ Ionenquelle: E.W.Schlag, H.J.Neusser, U.Boesl Deutsches Patent 1983, Nr. 2 942 386
/7/ Analytical spectroscopy in supersonic expansions; J.M.Hayes, Chem. Rev. **87**, (1987) 745.
/8/ Rotationally cooled laser-induced fluorescence/gas chromatography; J.M.Hayes, G.J.Small, **54**, (1982) 1204.
/9/ Supersonic jet spectroscopy with a capillary gas chromatographic inlet; S.W.Stiller, M.V.Johnston, Anal. Chem. **59,** (1987) 567.
/10/ Fast, high temperature and thermolabile GC-MS in supersonic molecular beams; S.Dagan, A.Amirav, Int. J. Mass Spectrom. Ion Proc. **133**, (1994) 187.
/11/ Gas chromatography/multiphoton ionization fourier transform mass spektrometry; T.M.Sack, D.A.McCrery, M.L.Gross, Anal. Chem. **57,** (1985) 1290.
/12/
   a) Capillary gas chromatography/pulsed supersonic jet/fluorescence excitation spectroscopy for the identification of methylanthracenes in a complex environmental sample; B.V.Pepich, J.B.Callis, D.H.Burns, M.Gouterman, D.A.Kalman, Anal. Chem. **58,** (1986) 2825;
   b) Pulsed free jet expansion system for high-resolution fluorescence spectroscopy of capillary gas chromatographic effluents; B.V.Pepich, J.B.Callis, J.D.Sh. Danielson, M. Gouterman, Rev, Sci. Instrum. **57,** (1986) 878.
/13/
   a) High temperature pulsed nozzle for supersonic jet spectrometry and its application to gas chromatography;
      T.Imasaka, T.Okamura, N.Ishibashi, Anal. Chem. **58,** (1986) 2152;
   b) Hyphenated techniques in supersonic jet spectroscopy and its analytical applications to aromatic hydrocarbons;
      N.Ishibashi, T.Imasaka, Analytical Sciences **7 Suppl.,** (1991) 489;
   c) Supersonic jet spectrometry and its application to chromatograph detectors T.Imasaka, Spectrochimica Acta **14,** (1991) 261.
/14/ A high pressure pulsed expansion valve for gases, liquids, and supercritical fluids C.Köster, J.Grotemeyer, E.W.Schlag, Z.Naturforsch. **46a,** (1990) 1285
/15/
   a) Laser mass spectrometry of dibenzodioxin, dibenzofuran and two isomers of dichlorodibenzodioxins: selective ionization; C.Weickhardt, R.Zimmermann, U.Boesl, E.W.Schlag, Rapid Comm Mass Spectrom. **7** (1993) 183.
   b) Isomer-selective ionization of chlorinated aromatics with lasers for analytical time-of-flight mass spectrometry; R.Zimmermann, U.Boesl, C.Weickhardt, D.Lenoir, K.-W. Schramm. A.Kettrup, E.W.Schlag, Chemosphere **29** (1994) 1877.

### ZEICHNUNGEN ZUR PATENTANMELDUNG:

### Ventil und seine Verwendung

### Ulrich Boesl, Ralf Zimmermann, Antonius Kettrup

- Figur1: Schema der Resonanz-verstärkten Multiphotonenionisation (REMPI). Nur wenn die Wellenlänge des ersten Photons in Resonanz mit einer spezifischen Molekülabsorptionsbande ist, kann dieses Molekül angeregt werden und ein weiteres Photon zur Ionisation absorbieren: Selektive Ionisation!
- Figur2: Drei verschiedene Kopplungen einer GC-Säule mit einem gepulsten Gasventil für Überschallstrahlen, den Stand der Technik für gepulste GC-Überschallstrahl-Ventile darstellend.
- Figur3a: Ausführungsform eines GC-Überschallstrahl-Pulsventils, entsprechend der Erfindung. Dargestellt ist der Ventilkopf
- Figur3b: Ausführungsform eines GC-Überschallstrahl-Pulsventils, entsprechend der Erfindung. Dargestellt ist das Gesamtventil mit Ventilkopf und Ventilantrieb.
- Figur3c: Ausführungsform eines Überschallstrahl-Pulsventils mit Gaszufuhr und Gasabfuhr, entsprechend der Erfindung. Dargestellt ist der Ventilkopf.
- Figur4: Ausführungsform einer Gesamtanlage zur dreidimensionalen GC-Laser-MS-Analyse, wobei die Kopplung über das GC-Überschallstrahl-Ventil erreicht wird.
- Figur5: Wellenlängenspektrum einer vibronischen Schwingungsbande des Benzols, nach Kühlung in einem Überschallstrahl, der durch ein Ventil gemäß Figur3 erzeugt wird. Der Vergleich mit simulierten Absorptionsbanden (z.B. für 2, 5, 15, 50 K) ergibt eine experimentelle "Rotationstemperatur" von 15 K.
- Figur6a: Gaschromatogramm, nachgewiesen mit REMPI und Flugzeitmassenspektrometer (TOF für time-of-flight). Die REMPI Wellenlänge (266 nm) war so gewählt, daß Aromaten als Gruppe selektiv nachgewiesen werden, nicht aber einzelene Aromaten. Es wurde auf vier Massen (92, 106, 120, 134) simultan nachgewiesen.
- Figur6b: Gaschromatogramme, nachgewiesen in einem konventionellen GC (oben) und mit REMPI, Flugzeitmassenanalysator und Kopplung über gepulstes Ventil nach Figur3 (unten). GC-Kapillaren mit identischen Parametern wurden in beiden Fällen verwendet. Beide Gaschromatogramme wurden mit der selben Probe wie in Figur 6 gemessen; sie entsprechen dort der Molekülgruppe M=106, und belegen, daß das gepulste Ventil zu keiner GC-Peak-Verschleifung führt.
- Figur7: UV-Absorptionsspektren von Ethylbenzol, ortho-, meta- und para-Xylol. Die Schärfe der Spektren wurde durch Kühlung in einem Überschallstrahl erreicht und ist Voraussetzung für die Selektion einer der vier Komponenten durch Laserlicht.
- Figur8: Oben: Gaschromatogramm, nachgewiesen mit REMPI und Flugzeitmassenspektrometer. Die REMPI Wellenlänge betrug 266 nm (semiselektiv). Das Gaschromatogramm stellt einen Ausschnitt aus Figur6 für die Retentionszeit von 3 min bis 3 min 40 sec (Molekülgruppe M= 106) dar. Unten: Gaschromatogramm, nachgewiesen mit REMPI und Flugzeitmassenspektrometer bei den selben GC-Bedingungen, aber nun einer REMPI Wellenllänge von 272,3 nm (selektiv für para-Xylol).
- Figur9: Beispiel für die bisher erreichte Empfindlichkeit am Beispiel von Toluol: Optimierung durch des GC-Überschallstrahl-Pulsventil. Eine Optimierung der Ionisationsausbeute wurde noch nicht durchgeführt und verspricht eine weitere Empfindlichkeitssteigerung.

## Patentansprüche

1. Gepulstes Ventil bestehend aus einer Kappe, einem beweglichen Stößel, einer Düse und einer Gaszuführung, einem Führungsteil für den beweglichen Stössel, einer Senkung über dem Düsenloch und einer scheibenförmigen Einlage, dadurch gekennzeichnet, daß die scheibenförmige Einlage (4) so ausgestaltet ist, daß sie der Realisierung eines minimalen Totvolumens dient und eine radiale Nut als Führung für die Gaszuführung (6) und eine zentrale Bohrung mit dem Durchmesser des beweglichen Stössels aufweist, wobei die Innenmaße der Nut genau den Außenmaßen der Gaszuführung (6) entsprechen.

2. Gepulstes Ventil nach Anspruch 1 dadurch gekennzeichnet, daß die Spitze des beweglichen Stössels (1) konisch ausgebildet ist und mit dem oberen Rand der Senkung über dem Düsenloch (7) eine Dichtung bilden kann.

3. Gepulstes Ventil nach Anspruch 1 oder 2, dadurch gekennzeichnet, das der Rand der Senkung konisch abgesenkt ist.

4. Gepulstes Ventil nach einem der Ansprüche 1 bis 3, gekennzeichnet durch den Probenabzug (6a).

5. Gepulstes Ventil nach einem der Ansprüche 1 bis 4, gekennzeichnet durch Dichtungen (8, 8a) für die Gaszuführung (6) und den Probenabzug (6a).

6. Gepulstes Ventil nach einem der Ansprüche 1 bis 5 gekennzeichnet durch eine Heizung (5).

7. Gepulstes Ventil nach einem der Ansprüche 1 bis 6 gekennzeichnet durch eine Kühlung (12) für den Ventilantrieb (11).

8. Verwendung des gepulsten Ventils gemäß einem der Ansprüche 1 bis 7 zur Einkopplung eines Gasstroms in ein sekundäres Spurenanalysegerät.

## Claims

1. Pulsed valve, comprising a cap, a displaceable stem, a nozzle and a gas supply pipe, a means for guiding the displaceable stem, a depression above the nozzle aperture and a disc-shaped insert, characterised in that the disc-shaped insert (4) is so configured that it serves to achieve a minimum dead volume and includes a radial groove as the guide means for the gas supply pipe (6) and a central bore having the diameter of the displaceable stem, the internal dimensions of the groove corresponding exactly to the external dimensions of the gas supply pipe (6).

2. Pulsed valve according to claim 1, characterised in that the tip of the displaceable stem (1) has a conical configuration and may form a seal with the upper edge of the depression above the nozzle aperture (7).

3. Pulsed valve according to claim 1 or 2, characterised in that the edge of the depression is conically lowered.

4. Pulsed valve according to one of claims 1 to 3, characterised by the sample discharge pipe (6a).

5. Pulsed valve according to one of claims 1 to 4, characterised by seals (8, 8a) for the gas supply pipe (6) and the sample discharge pipe (6a).

6. Pulsed valve according to one of claims 1 to 5, characterised by a heater (5).

7. Pulsed valve according to one of claims 1 to 6, characterised by a cooler (12) for the valve driving means (11).

8. Use of the pulsed valve according to one of claims 1 to 7 for introducing a gas stream into a secondary trace analyser.

## Revendications

1. Vanne pulsée formée d'un capuchon, d'un poussoir mobile, d'une buse et d'une alimentation en gaz, d'un organe de guidage du poussoir mobile, d'une cavité au-dessus de l'orifice de buse et d'un insert en forme de rondelle,
caractérisée en ce que
l'insert en forme de rondelle (4) est réalisé pour obtenir un volume mort minimum et il comporte une rainure comme moyen de guidage pour l'alimentation en gaz (6) et un perçage central correspondant au diamètre du poussoir mobile, les dimensions intérieures de la rainure correspondant exactement aux dimensions extérieures de l'alimentation en gaz (6).

2. Vanne pulsée selon la revendication 1,
caractérisée en ce que
la pointe du poussoir mobile (1) est conique et fait l'étanchéité avec le bord supérieur de la cavité au-dessus de l'orifice de buse (7).

3. Vanne pulsée selon la revendication 1 ou 2,
caractérisée en ce que
le bord de la cavité est réduit suivant une forme conique.

4. Vanne pulsée selon l'une quelconque des revendications 1 à 3,
caractérisée par
une extraction d'échantillon (6a).

5. Vanne pulsée selon l'une quelconque des revendications 1 à 4,
caractérisée par
des joints (8, 8a) pour l'alimentation en gaz (6) et l'extraction d'échantillon (6a).

6. Vanne pulsée selon l'une quelconque des revendications 1 à 5,
caractérisée par
un moyen de chauffage (5).

7. Vanne pulsée selon l'une quelconque des revendications 1 à 6,
caractérisée par
un moyen de refroidissement (12) pour le moteur (11) de la vanne.

8. Application de la vanne pulsée selon l'une quelconque des revendications 1 à 7 pour injecter une veine de gaz dans un appareil d'analyse secondaire de traces.
